# EUROPÄISCHE PATENTANMELDUNG

(11) **EP 2 963 383 A1**
(43) Veröffentlichungstag der Anmeldung: **06.01.2016**
(21) Anmeldenummer: 14174899.6
(22) Anmeldetag: 30.06.2014
(51) Int. Cl.: G01B 11/275

(54) **Radhalterung einer Achsvermessungseinrichtung**

(71) Anmelder: ROBERT BOSCH GMBH, 70442 Stuttgart (DE)
(72) Erfinder: Wagmann, Christian, 80538 München (DE); Gyongyosi, Etienn, 93404 Saint Quen (FR); Hodissen, Sven, 80637 München (DE); Backes, Jochen, 80687 München (DE)
(74) Vertreter: Cabinet HERRBURGER

(57) **Zusammenfassung**

Es wird eine Radhalterung (20) zum Befestigen eines Messmittels einer Achsvermessungseinrichtung an einem Fahrzeugrad (10) vorgeschlagen. Die Radhalterung (20) weist eine Spanneinrichtung (21) auf, mit welcher die Radhalterung (20) am Fahrzeugrad (10) befestigt wird. Zur Bestimmung der Winkelposition der Radhalterung (20) und/oder des Fahrzeugrades (10) ist an der Radhalterung (20) eine Drehwinkelanzeige (40) angeordnet.

## Beschreibung

### Stand der Technik

Die Erfindung betrifft eine Radhalterung zum Befestigen eines Messmittels einer Achsvermessungseinrichtung an einem Fahrzeugrad eines Kraftfahrzeuges nach dem Oberbegriff des Anspruchs 1.

Aus Prospektmaterial der Firma Beissbarth GmbH, München, ist unter der Bezeichnung "Universalhalter" eine Radhalterung zur Aufnahme von Messmitteln von Achsvermessungseinrichtungen bekannt. Die Radhalterung weist eine Spanneinrichtung mit zwei Spannschlitten auf, die an zwei parallel verlaufenden Führungsschienen geführt sind. An den Spannschienen befinden sich zwei Arme mit Spannklauen, wobei die Spannschlitten radial verstellbar sind, so dass die Radhalterung sich an der Felge des Fahrzeugrades festklemmt. Die mechanisch stabilste Positionierung der Radhalterung am Fahrzeugrad ist dabei die, wenn die Radhalterung senkrecht am Fahrzeugrad bzw. an der Felge des Fahrzeugrades angebracht wird. Eine genaue Position der Drehlage der Radhalterung am Fahrzeugrad lässt sich mit der bekannten Radhalterung nicht einstellen.

### Offenbarung der Erfindung

Die erfindungsgemäße Radhalterung mit den kennzeichnenden Merkmalen des Anspruchs 1 hat den Vorteil, dass es dem Bediener einer Achsvermessungseinrichtung ermöglicht wird, die Radhalterung in einer definierten Winkelposition am Fahrzeugrad anzubringen. Dem Bediener wird angezeigt, wo die optimale Winkelposition der Radhalterung an der Felge ist. Ein falsches Aufspannen der Radhalterung wird somit verhindert.

Mit Hilfe der Drehwinkelanzeige ist weiterhin eine genaue Winkelposition der an der Radhalterung angebrachten Messmittel möglich. Eine genaue Winkelposition des Messmittels ist beispielsweise von Vorteil bei der Felgenschlagkompensation von optischen 3D-Achsvermessungssystemen oder bei einer definierten Ausrichtung von Messeinheiten mit einem optischen CCD-Messsystem, bei dem die Messeinheiten am Fahrzeugrad angebracht werden.

Ein vorhandenes mechanisches Bauteil der Radhalterung eignet sich besonders vorteilhaft zum Anbringen der Drehwinkelanzeige an der Radhalterung. Eine technisch einfache Möglichkeit besteht darin, als Drehwinkelanzeige eine Nivelliereinrichtung mit mindestens einer Libelle, welche beispielsweise bei Wasserwaagen zum Einsatz kommen, einzusetzen, wobei mindestens eine Nivelliereinrichtung an der Spanneinrichtung oder am Träger zur Aufnahme des Messmittels angeordnet ist Zweckmäßigerweise weist die Nivelliereinrichtung zumindest zwei winklig zueinander angeordnete Libellen auf. Um ausgehend aus einer senkrechten Position der Radhalterung gleiche Drehwinkel in beide Drehrichtungen des Fahrzeugrades zu ermöglichen, weisen die beiden Libellen jeweils den gleichen Winkelbetrag in entgegengesetzter Richtung auf. Dazu liegen die Libellen der Nivelliereinrichtung symmetrisch zu einer zwischen den Libellen verlaufenden Symmetrieachse. Zur Durchführung einer optimalen Felgenschlagkompensation sollte der Winkelbetrag der Winkel der Libellen mindestens 30 Grad betragen.

Eine zweckmäßige Anordnung der Nivelliereinrichtung liegt vor, wenn die Libellen der Nivelliereinrichtung an einem Tragkörper eines Spannschlittens der Spanneinrichtung angeordnet sind. Dazu sind am Tragkörper Vertiefungen ausgebildet, in welche die Libellen gefasst eingesetzt sind. Die Vertiefungen müssen dazu am Tragkörper die entsprechende Winkellage der jeweiligen Libelle aufweisen.

Um für verschiedenen Winkelpositionen der Radhalterung am Fahrzeugrad eine Drehwinkelanzeige durchzuführen und/oder mehrere verschiedene Drehwinkel des Fahrzeugrades anzuzeigen, ist es zweckmäßig, wenn an der Radhalterung eine zweite Nivelliereinrichtung mit zumindest zwei weiteren winklig zueinander angeordneten Libellen vorgesehen ist. Um mit beiden Nivelliereinrichtungen ausgehend von einer senkrechten Ausgangslage der Radhalterung die gleichen Drehwinkel einzustellen, ist es zweckmäßig, wenn die weiteren Libellen der zweiten Nivelliereinrichtung symmetrisch zu den Libellen der ersten Nivelliereinrichtung in Bezug zu einer zur Radachse des Fahrzeugrades fluchtend verlaufenden Achse an der Spanneinrichtung der Radhalterung angeordnet sind.

### Ausführungsbeispiel

Ein Ausführungsbeispiel der Erfindung ist in der Zeichnung dargestellt und in der nachfolgenden Beschreibung näher erläutert.

Es zeigen:
- Figur 1: ein Fahrzeugrad eines Kraftfahrzeuges mit einer am Fahrzeugrad befestigte Radhalterung in einer senkrechten Ausrichtung,
- Figur 2: eine perspektivische Ansicht der Radhalterung gemäß Figur 1, 3, 4, 5 und 6,
- Figur 3: die an einem Fahrzeugrad befestigte Radhalterung in einer ersten gedrehten Ausrichtung,
- Figur 4: die an einem Fahrzeugrad befestigte Radhalterung in einer zweiten gedrehten Ausrichtung,
- Figur 5: die an einem Fahrzeugrad befestigte Radhalterung mit einem Messmittel in einer ersten gedrehten Ausrichtung des Messmittels und Figur 6 die an einem Fahrzeugrad befestigte Radhalterung mit einem Messmittel in einer zweiten gedrehten Ausrichtung des Messmittels.

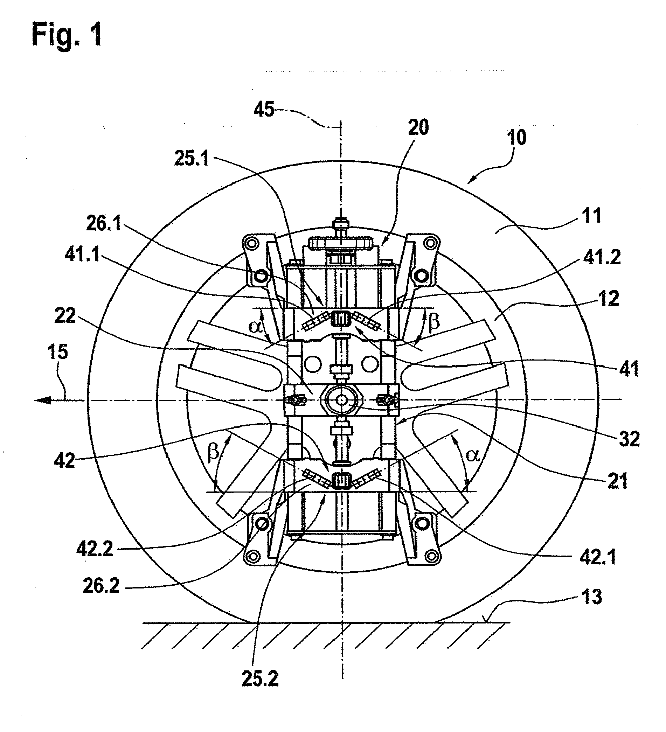

Figur 1 zeigt ein Fahrzeugrad 10 eines Kraftfahrzeuges in einem nicht dargestellten Messplatz mit einer Radhalterung 20 zum Befestigen eines Messmittels einer Achsvermessungseinrichtung. Das Fahrzeugrad 10 ist mit einem Reifen 11 und einer Felge 12 dargestellt. Das Fahrzeugrad 10 sitzt mit dem Reifen 11 auf einer Aufstandsfläche 13 auf. Mit einem Pfeil 15 ist die Fahrtrichtung des Kraftfahrzeugs am Messplatz dargestellt. Die in Figur 1 dargestellte Radhalterung 20 befindet sich am Fahrzeugrad 10 in einer im Wesentlichen senkrechten Ausrichtung in Bezug zur Aufstandsfläche 13.

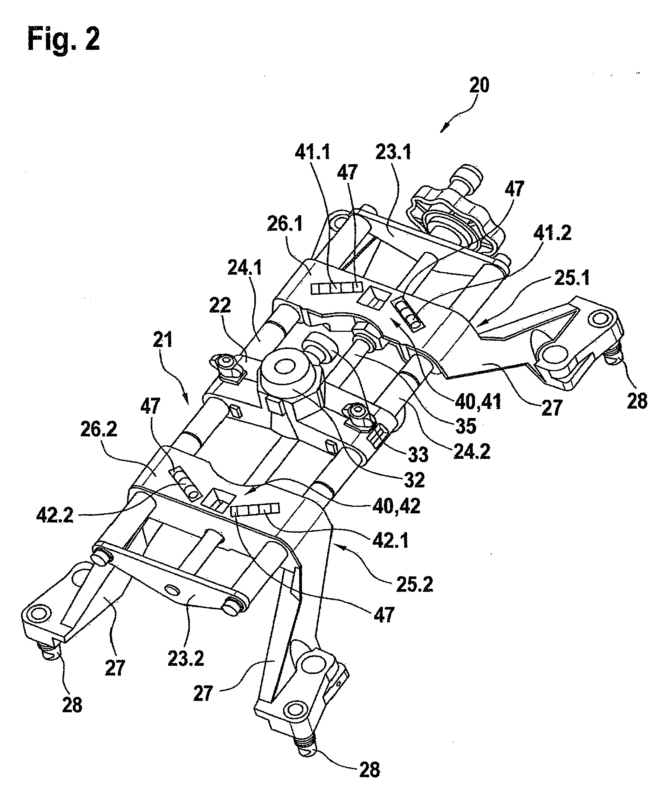

Die in Figur 2 im Detail dargestellte Radhalterung 20 weist eine Spanneinrichtung 21 zum Befestigen der Radhalterung 20 am Fahrzeugrad 10 und einen Träger 22 zur Aufnahme des Messmittels auf. Die Spanneinrichtung 21 umfasst ein Traggestell mit zwei Tragteilen 23.1 und 23.2, die mittels zweier paralleler Führungsstangen 24.1 und 24.2 miteinander verbunden sind. An den beiden Führungsstangen 24.1, 24.2 sind ein erster Spannschlitten 25.1 und ein zweiter Spannschlitten 25. 2 verschiebbar angeordnet. Dazu weist der erste Spannschlitten 25.1 einen ersten Tragkörper 26.1 und der zweite Spannschlitten 25. 2 einen zweiten Tragkörper 26.2 auf. An den Tragkörpern 26.1 und 26.2 der beiden Spannschlitten 25.1, 25.2 sind jeweils zwei Spannarme 27 mit jeweils einer Spannklaue 28 ausgebildet. Die Tragkörper 26.1 und 26.2 führen die jeweiligen Spannschnitten 25.1 und 25.2 an den Führungsstangen 24.1 und 24.2, so dass die beiden Spannschlitten 25.1 und 25.2 radial verstellbar sind.

An den Führungsstangen 24.1 und 24.2 ist weiterhin der Träger 22 mittels beispielsweise zwei Klemmschrauben befestigt. Durch Lösen der Klemmschrauben kann der Träger 22 aus einer dargestellten, mit der Radachse des Fahrzeugrades 10 fluchtenden Mittelstellung in eine außermittige Position verschoben werden. In der außermittigen Stellung wird der Träger 22 durch Feststellen der Klemmschrauben wieder fixiert.

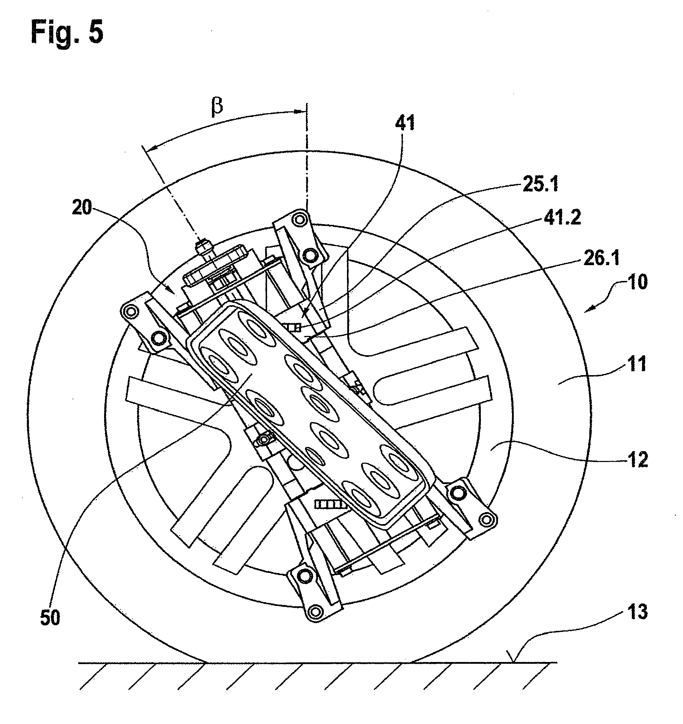

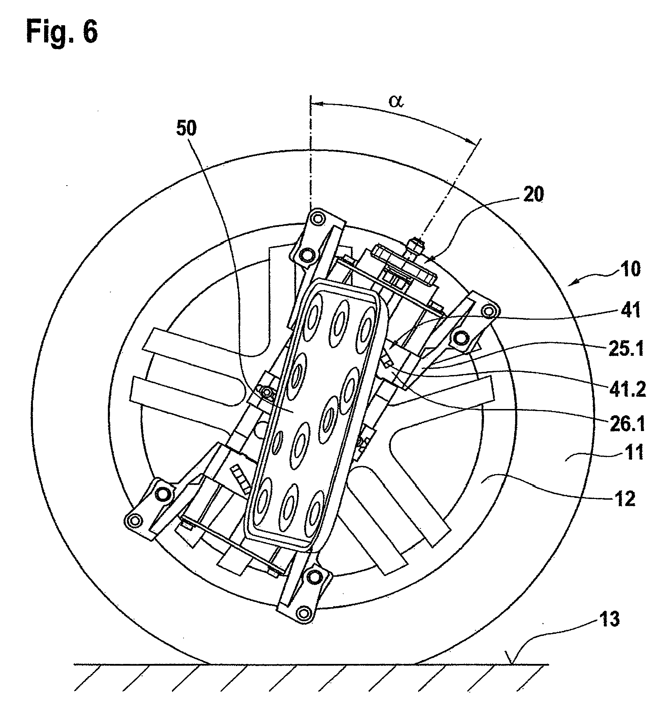

Am Träger ist eine Aufnahme 32 zum Befestigen des Messmittels ausgebildet. Die Messmittel werden beispielsweise mit einer Steckachse in der Aufnahme 32 aufgenommen und mittels einer Klemmschraube 33 befestigt. Als Messmittel können beispielsweise Messtargets 50 eines optischen 3D-Achsvermessungssystems oder Messeinheit eines optischen CCD-Achsvermessungssystems eingesetzt werden. Eine Anwendung der Radhalterung 20 mit einem Messtarget 50 wird später in den Figuren 5 und 6 beschrieben.

Die Verstellung der Spannschlitten 25.1, 25.2 erfolgt mittels einer an den Tragteilen 23.1. und 23.2 gelagerten Spindel 35. Mittels der Spindel 35 werden die Spannschlitten 25.1 und 25.2 radial bewegt, so dass sich die Spannklauen 28 an der Felge 12 des Fahrzeugrades 10 verspannen können. Dadurch erhält die Radhalterung 20 eine feste Position am Fahrzeugrad 10. In der Praxis wird die Radhalterung 20 so befestigt, dass sich die Führungsstangen 24.1, 24.2 im Wesentlichen senkrecht zur Aufstandsfläche 13 am Fahrzeugrad 10 befinden, wie in Figur 1 dargestellt.

Zur Bestimmung des Drehwinkels bzw. der Winkellage der Radhalterung 20 und/oder des Fahrzeugrades 10 ist die Radhalterung 20 weiterhin beispielsweise mit zwei Drehwinkelanzeigen 40 ausgestattet. Als Drehwinkelanzeigen 40 dienen eine erste Nivelliereinrichtung 41 mit mindestens einer Libelle und eine zweite Nivelliereinrichtung 42 mit mindestens einer weiteren Libelle. Im vorliegenden Ausführungsbeispiel besitzt die erste Nivelliereinrichtung 41 eine erste Libelle 41.1 und eine zweite Libelle 41.2 und die zweite Nivelliereinrichtung 42 ebenfalls eine erste Libelle 42.1 und eine zweite Libelle 42.2

Die erste Nivelliereinrichtung 41 ist beispielsweise am ersten Tragkörper 26.1 und die zweite Nivelliereinrichtung 42 am zweiten Tragkörper 26.2 des jeweiligen Spannschnitts 25.1, 25.2 angeordnet. Dadurch nimmt die erste Nivelliereinrichtung 41 bei der in Figur 1 dargestellten senkrechten Anordnung der Radhalterung 20 am Fahrzeugrad 10 eine über der Radachse liegende obere Position und die zweite Nivelliereinrichtung 42 eine unterhalb der Radachse liegende untere Position ein. Es ist aber auch denkbar, eine Nivelliereinrichtung mit zumindest einer Libelle am Träger 22 anzuordnen.

Zwischen den Libellen 41.1 und 41.2 und den Libellen 42.1 und 42.2 verläuft gemäß Figur 1 eine Symmetrieachse 45. Die Libellen 41.1 und 41.2 der ersten Nivelliereinrichtung 41 und die Libellen 42.1 und 42.2 der zweiten Nivelliereinrichtung 42 weisen jeweils den gleichen Winkelbetrag in entgegengesetzter Richtung auf, so dass die Libellen 41.1 und 41.2 der ersten Nivelliereinrichtung 41 und die Libellen 42.1 und 42.2 der zweiten Nivelliereinrichtung 42 jeweils symmetrisch zur Symmetrieachse 45 liegen. Weiterhin ist die Anordnung der Libellen 41.1 und 41.2 der ersten Nivelliereinrichtung 41 am ersten Tragkörper 26.1 und die Anordnung der Libellen 42.1 und 42.2 der zweiten Nivelliereinrichtung 42 am zweiten Tragkörper 26.2 symmetrisch in Bezug zu einer Achse der Aufnahme 32 in einer Mittelposition, in welcher sich die Achse der Aufnahme 32 fluchtend zur Radachse des Fahrzeugrades 10 befindet.

Es ist aber nicht zwingend, dass die Anordnung der Libellen an den Tragkörpern 26.1, 26.2 mit den gleichen entgegengesetzten Winkeln erfolgt. Die Libellen 41.1, 41.2 und die Libellen 42.1, 42.2 lassen sich auch mit jedem beliebigen Winkel anordnen. Es ist außerdem denkbar, für die senkrechte Ausrichtung der Radhalterung 20 am Fahrzeugrad 10 eine weitere Libelle vorzusehen, die eine waagerechte Lage, welche senkrecht zur Symmetrieachse 45 ausgelegt ist, anzeigt.

Im vorliegenden Ausführungsbeispiel beträgt der Winkel α für die Ausrichtung der ersten, vorderen Libelle 41.1 der ersten Nivelliereinrichtung 41 und der ersten vorderen Libelle 42.1 der zweiten Nivelliereinrichtung jeweils - 30 Grad und der Winkel β für die Ausrichtung der zweiten, hinteren Libelle 41.2 der ersten Nivelliereinrichtung 41 und der zweiten, hinteren Libelle 42.2 der zweiten Nivelliereinrichtung jeweils + 30 Grad bezogen auf eine Ebene, die senkrecht durch die Symmetrieachse 45 verläuft. Die Bezeichnung vordere und hintere Libelle bezieht sich auf eine Betrachtung in Fahrtrichtung des Kraftfahrzeuges, wobei sich die entsprechende Nivelliereinrichtung 41, 42 jeweils in der oberen Position am Fahrzeugrad 10 befindet.

Zur Anordnung der ersten Nivelliereinrichtung 41 und der zweiten Nivelliereinrichtung 42 an der Spanneinrichtung 21 sind gemäß Figur 2 für die jeweiligen Libellen 41.1, 41.2 und 42.1, 42.2 in den jeweiligen Tragkörper 26.1 und 26.2 im entsprechenden Winkel der jeweiligen Libelle 41.1, 41.2 und 42.1, 42.2 jeweils Vertiefungen 47 eingebracht, wobei die Vertiefungen 47 für eine genaue Winkellage entsprechend genau bearbeitet sein müssen. Die Vertiefungen 47 sind dabei jeweils in eine frontale Stirnfläche der Tragkörper 26.1 und 26.2 eingebracht Die Vertiefungen 47 dienen dazu, die Libellen 41.1, 41.2 und 42.1, 42.2 jeweils in einer gefassten Ausführung an der Radhalterung 20 anzubringen.

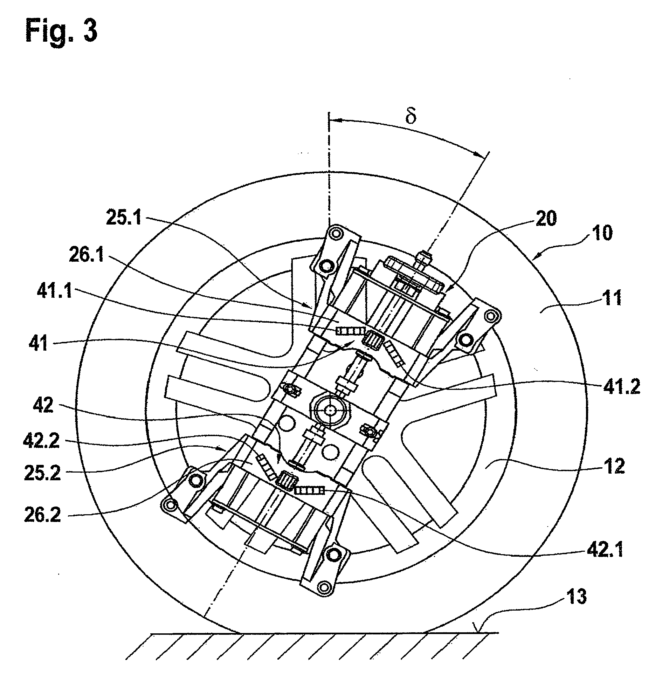

Figur 3 zeigt ein Fahrzeugrad 10, das ausgehend aus einer senkrechten Ausgangslage der Radhalterung 20 gemäß Figur 1 um einen Drehwinkel δ entgegengesetzt zur Fahrtrichtung des Fahrzeugs gedreht wurde. Den gleichen Drehwinkel δ nimmt somit die Radhalterung 20 am Fahrzeugrad 10 ein. Durch die Verwendung des erfindungsgemäßen Drehwinkelanzeigers 40 Ist es möglich, den Drehwinkel durch die an der Radhalterung 20 angebrachte Drehwinkelanzeige 40 zu bestimmen oder die Raddrehung auf einen bestimmten Drehwinkel einzustellen. Dazu dient in Figur 3 die erste, obere Nivelliereinrichtung 41, indem die erste, vordere Libelle 41.1 in die waagerechte Ausrichtung gebracht wird. Ausgehend von einer exakt senkrechten Ausgangslage gemäß Figur 1, wird durch Abrollen oder durch Drehen des Fahrzeugrades 10 bis zum Einnivellieren der ersten Libelle 41.1 der ersten Nivelliereinrichtung 41 ein Drehwinkel δ zurückgelegt, der dem Winkel α der ersten Libelle 41.1 der ersten Nivelliereinrichtung 41 entspricht. Beim Ausführungsbeispiel in Figur 3 beträgt somit der Drehwinkel δ 30 Grad.

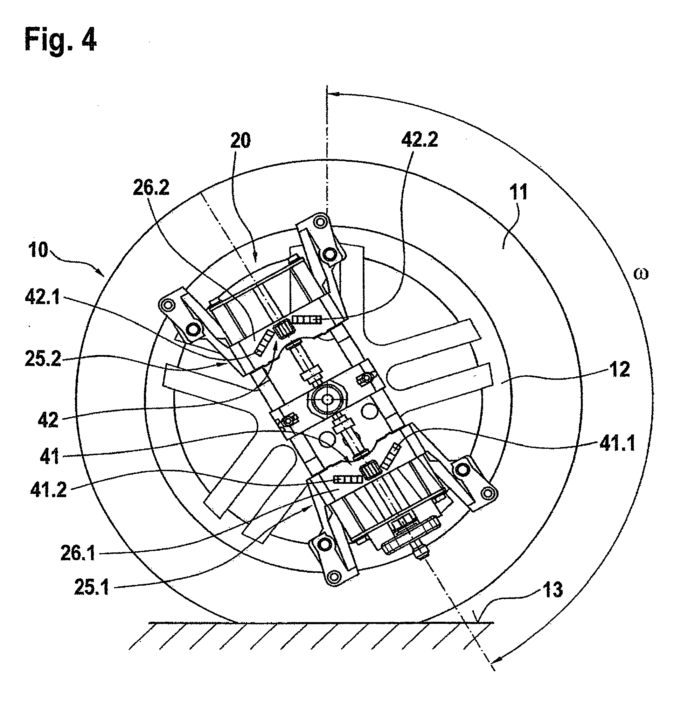

Figur 4 zeigt eine Radstellung des Fahrzeugrades 10, bei der ausgehend aus einer senkrechten Ausgangslage der Radhalterung 20 gemäß Figur 1 das Fahrzeugrad 10 um einen Drehwinkel ω entgegengesetzt zur Fahrtrichtung des Fahrzeugs gedreht wurde. Bei dieser Ausführung wurde die zweite, hintere Libelle 42.2 der zweiten Nivelliereinrichtung 42 einnivelliert. Dadurch legt das Fahrzeugrad 10 einen Drehwinkel ω zurückgelegt, der 150 Grad beträgt.

Mit Hilfe der Figuren 5 und 6 wird nachfolgend die Verwendung der Radhalterung 20 mit Drehwinkelanzeige 40 an Hand der bereits genannten Felgenschlagkompensation erläutert. Zur Felgenschlagkompensation bei optischen 3D-Achsvermessungseinrichtungen wird ein Rollweg der Fahrzeugräder 10 von mindestens 60° benötigt. Zum Ausführen eines Rollweges von 60° wird von einer Drehposition des Fahrzeugrades gemäß Figur 5 ausgegangen. In dieser Drehposition befindet sich die rechte, hintere Libelle 41.2 der ersten Nivelliereinrichtung 41 in ihrer waagerechten Ausrichtung. Das Fahrzeugrad 10 wird dann durch Abrollen oder Drehen des Fahrzeugrades 10 in die Drehposition gemäß Figur 6 gebracht, bei der sich die linke, vordere Libelle 41.1 der ersten Nivelliereinrichtung 41, die in Figur 6 durch das Messtarget 50 verdeckt ist, in der waagerechten Ausrichtung befindet. Dabei wird ein Drehwinkel zurückgelegt, der sich durch die Addition der Winkel α und β ergibt, im vorliegenden Ausführungsbeispiel 60 Grad.

Durch eine entsprechende Wahl der winkligen Anordnung der Libellen 41.1 und 41.2 der ersten Nivelliereinrichtung 41 und/oder der Libellen 42.1 und 42.2 der zweiten Nivelliereinrichtung 42 lassen sich auch beliebig andere Drehwinkel ausführen.

Eine weitere vorteilhafte Anwendung findet die Radhalterung 20 mit Drehwinketanzeige 40 beim Vermessen von Fahrzeugrädern 10 mit großen Reifen 11 mittels optischer CCD-Achsvermessungssysteme, um bei einer außermittigen Anordnung der Messeinheiten am Fahrzeugrad 10 eine gleiche Ausrichtung der gegenüberliegenden Radhalterungen einzustellen.

## Patentansprüche

1. Radhalterung zum Anbringen eines Messmittels einer Achsvermessungseinrichtung an einem Fahrzeugrad (10) mit einer Spanneinrichtung (21), mit welcher die Radhalterung am Fahrzeugrad (10) befestigt wird, und mit einem Träger (22) zur Aufnahme des Messmittel, **dadurch gekennzeichnet, dass** eine Drehwinkelanzeige (40) zur Bestimmung der Winkelposition der Radhalterung (20) und/oder des Fahrzeugrades (10) vorgesehen ist

2. Radhalterung nach Anspruch 1, **dadurch gekennzeichnet, dass** die Drehwinkelanzeige (40) an der Spanneinrichtung (21) oder am Träger (22) angeordnet ist.

3. Radhalterung nach Anspruch 1 oder 2, **dadurch gekennzeichnet, dass** die Drehwinkelanzeige (40) von mindestens einer Nivelliereinrichtung (41, 42) mit mindestens einer Libelle (41.1, 41.2, 42.1, 42.2) gebildet ist.

4. Radhalterung nach Anspruch 3, **dadurch gekennzeichnet, dass** die Nivelliereinrichtung (41,42) zumindest zwei winklig zueinander angeordnete Libellen (41.1,41.2, 42.1, 42.2) aufweist.

5. Radhalterung nach Anspruch 4, **dadurch gekennzeichnet, dass** die beiden Libellen (41.1, 41.2, 42.1, 42.2) der Nivelliereinrichtung (41, 42) jeweils den gleichen Winkelbetrag in entgegengesetzter Richtung aufweisen.

6. Radhalterung nach Anspruch 5, **dadurch gekennzeichnet, dass** die Libellen (41.1, 41.2, 42.1, 42.2) der Nivelliereinrichtung (41, 42) jeweils symmetrisch zu einer zwischen den Libellen (41.1 und 41.2, 42.1 und 42.2) verlaufenden Symmetrieachse (45) liegen.

7. Radhalterung nach Anspruch 5, **dadurch gekennzeichnet, dass** der Winkelbetrag mindestens 30 Grad beträgt.

8. Radhalterung nach Anspruch 2, **dadurch gekennzeichnet, dass** die Spanneinrichtung (21) zwei Spannschlitten (25.1, 25.2) mit jeweils einem Tragkörper (26.1, 26.2) und zwei parallele Führungsstangen (24.1, 24.2) aufweist, und dass die beiden Tragkörper (26.1, 26.2) an den Führungsstangen (24.1, 24.2) verstellbar geführt ist.

9. Radhalterung nach Anspruch 8, **dadurch gekennzeichnet, dass** im Tragkörper (26.1, 26.2) Vertiefungen (47) ausgebildet sind, in welche die Libellen (41.1, 41.2, 42.1, 42.2) eingesetzt sind.

10. Radhalterung nach einem der vorhergehenden Ansprüche, **dadurch gekennzeichnet, dass** eine zweite Nivelliereinrichtung (42) mit zumindest zwei weiteren winklig zueinander angeordnete Libellen (42.1, 42.2) vorgesehen ist.

11. Radhalterung nach Anspruch 10, **dadurch gekennzeichnet, dass** die weiteren Libellen (42.1, 42.2) der zweiten Nivelliereinrichtung (42) symmetrisch zu den Libellen (41.1, 41.2) der ersten Nivelliereinrichtung (41) in Bezug zu einer zur Radachse des Fahrzeugrades (10) verlaufenden Achse ausgebildet sind.
